(19) Europäisches Patentamt
European Patent Office
Office européen des brevets

(11) **EP 4 697 102 A1**

(12) **EUROPEAN PATENT APPLICATION**
published in accordance with Art. 153(4) EPC

(43) Date of publication:
**18.02.2026 Bulletin 2026/08**

(21) Application number: **23933089.7**

(22) Date of filing: **13.07.2023**

(51) International Patent Classification (IPC):
*G03G 15/20* (2006.01)       *C08K 3/04* (2006.01)
*C08L 79/08* (2006.01)

(52) Cooperative Patent Classification (CPC):
**C08K 3/04; C08L 79/08; G03G 15/20**

(86) International application number:
**PCT/JP2023/025961**

(87) International publication number:
**WO 2024/214314 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.04.2023 JP 2023065037**

(71) Applicant: **I.S.T Corporation
Otsu-shi, Shiga 520-2153 (JP)**

(72) Inventor: **YOSHIMOTO, Akimasa
Otsu-shi, Shiga 520-2153 (JP)**

(74) Representative: **TBK
Bavariaring 4-6
80336 München (DE)**

(54) **POLYIMIDE TUBE**

(57)    The objective of the present invention is to provide a fixing belt which has sufficiently excellent thermal conductivity so that it can be used suitably with the fixing belt or the like, and is resistant to tearing due to withdrawal of a sheet when a paper jam occurs. A polyimide tube contains a polyimide resin, the polyimide resin contains carbon nanotubes. The polyimide tube has a thermal conductivity of 1.00 W/mK or higher, the polyimide tube has a thermal conductivity in a longitudinal direction / thermal conductivity in a circumferential direction of 1.05 or more, and the product of a tensile modulus of elasticity in the longitudinal direction of the polyimide tube and the tensile load at break in a tensile test is 4000 $kgf^2/mm^2$ or more.

EP 4 697 102 A1

**Description**

**TECHNICAL FIELD**

The present invention relates to a polyimide tube which can be suitably used for a fixing belt or the like mounted on an image forming apparatus or the like.

**BACKGROUND**

In an image forming apparatus such as a copying machine or a printer using an electrophotographic system, an unfixed toner image formed on a recording medium such as a recording paper is fixed by a fixing device. In this method, the transfer paper on the fixing tube side surface of which the heat-sensitive ink is temporarily adhered is fed between the fixing belt having the heater on the back side and the press roller, whereby the heat-sensitive ink is fused and fixed to the transfer paper, and the heat-sensitive ink is pressed against the transfer paper, whereby the fixing is strengthened.

A method of including a filler having excellent thermal conductivity (a filler having high thermal conductivity) in a base layer of a fixing belt is widely known in order to improve thermal conductivity of the fixing belt to improve fixing property of a heat-sensitive ink to transfer paper, to shorten waiting time after power is turned on, to reduce power consumption, to increase fixing speed, and the like.

As a fixing belt to which the above method is applied, "a resin tubular material made of a heat-resistant resin as a base material, characterized in that a filler having a thermal conductivity of more than 60 W/mk is blended in an amount of 1 to 25 parts by volume" has been proposed in the past (see, for example, Japanese Patent Application Laid-Open No. 2006-330405).

**PRIOR ART DOCUMENTS**

**PATENT DOCUMENTS**

Patent Document 1: Japanese Patent Application Laid-Open No. 2006-330405

**SUMMARY OF THE INVE NTION**

**PROBLEM TO BE SOLVED BY THE INVENTION**

When a paper jam occurs in the image forming apparatus, the user must remove the fixing device and remove the jammed paper from the paper conveying path to release the paper jam. At this time, if the sheet is forcibly pulled out, a load is applied to the fixing belt, and the end portion of the fixing belt may be broken. In order to solve such a problem, there is a demand for a polyimide tube capable of producing a fixing belt which is resistant to tearing due to withdrawal of a sheet when a paper jam occurs while maintaining thermal conductivity.

The objective of the present invention is to provide a polyimide tube which can be suitably used for a fixing belt or the like, has excellent thermal conductivity, and is resistant to tearing due to the withdrawal of a sheet when a paper jam occurs.

**MEANS FOR SOLVING THE PROBLEM**

A polyimide tube according the present invention is a polyimide tube containing a polyimide resin, and the polyimide resin contains carbon nanotubes. The polyimide tube may be formed mainly of a polyimide resin. The polyimide tube may consist of polyimide resin and carbon nanotubes. The thermal conductivity of the polyimide tube in the thickness direction is 1.00 W/mK or more. A thermal conductivity in a longitudinal direction / a thermal conductivity in a circumferential direction of the polyimide tube (i.e., the ratio of the thermal conductivity in the longitudinal direction of the polyimide tube to the thermal conductivity in the circumferential direction of the polyimide tube) is 1.05 or more. A product of a tensile modulus of elasticity in a longitudinal direction and a tensile load at break in a tensile test is 4000.0 $kgf^2/mm^2$ or more.

The thermal conductivity of the polyimide tube in the thickness direction is preferably 3.2 W/mK or less, and more preferably 2.5 W/mK or less. The thermal conductivity in the longitudinal direction / the thermal conductivity in the circumferential direction of the polyimide tube is preferably 1.60 or less, more preferably 1.30 or less, and still more preferably 1.10 or less. In the polyimide tube, the product of the tensile modulus of elasticity in the longitudinal direction and the tensile load at break in the tensile test is preferably 13000 $kgf^2/mm^2$ or less, more preferably 11000 $kgf^2/mm^2$ or less, and still more preferably 8000 $kgf^2/mm^2$ or less.

The polyimide resin is preferably a blend of a first polyimide resin containing a unit derived from 3,3',4,4'-biphenyltetracarboxylic dianhydride and a unit derived from para-phenylenediamine, and a second polyimide resin containing a unit derived from pyromellitic dianhydride and a unit derived from 4,4'-diaminodiphenyl ether. The mass ratio of the first polyimide resin to the second polyimide resin is preferably in the range of 70:30 or more and 100:0 or less.

The tensile modulus of elasticity in the longitudinal direction of the polyimide tube is preferably 700 kgf/mm$^2$ or more. The tensile modulus of elasticity in the longitudinal direction of the polyimide tube is preferably 1200 kgf/mm$^2$ or less, and more preferably 1100 kgf/mm$^2$ or less.

**EFFECTS OF THE INVENTION**

By using the polyimide tube according to the present invention, it is possible to manufacture a fixing belt which is resistant to tearing due to withdrawal of a sheet when paper jamming occurs in a fixing device, while maintaining excellent thermal conductivity.

**MODE FOR CARRYING OUT THE INVENTION**

The polyimide tube according to the embodiment of the present invention is a polyimide tube containing a polyimide resin, and carbon nanotubes (hereinafter referred to as "CNT" in some cases) are contained in the polyimide resin. Hereinafter, such a polyimide tube is sometimes referred to as a "CNT-containing polyimide tube". The polyimide tube may be formed mainly of a polyimide resin. The "mainly" referred to herein means containing an amount of more than 50% by mass. The content of CNT is preferably 15 parts by volume or more and 35 parts by volume or less, more preferably 15 parts by volume or more and 32 parts by volume or less, and still more preferably 15 parts by volume or more and 30 parts by volume or less, based on the volume of the CNT-containing polyimide resin (that is, the total volume of the polyimide resin and CNT). The fiber diameter of the CNT is preferably in the range of 100 nm or more and 200 nm or less, more preferably in the range of 120 nm or more and 180 nm or less, and still more preferably in the range of 140 nm or more and 160 nm or less. The fiber length of the CNT is preferably in the range of 1 μm or more and 10 μm or less, and preferably in the range of 3 μm or more and 7 μm or less. The polyimide tube may consist of polyimide resin and CNT.

The thermal conductivity of the polyimide tube in the thickness direction is 1.00 W/mK or more. The thermal conductivity of the polyimide tube in the thickness direction is preferably 1.05 W/mK or more, and more preferably 1.10 W/mK or more. The thermal conductivity of the polyimide tube in the thickness direction is preferably high, but in consideration of the amount of CNT that can be added to the polyimide resin, the upper limit is preferably 3.2 W/mK, and more preferably 2.5 W/mK.

The polyimide tube has a ratio of (a thermal conductivity in a longitudinal direction) / (a thermal conductivity in a circumferential direction) (i.e., the ratio of the thermal conductivity in the longitudinal direction of the polyimide tube to the thermal conductivity in the circumferential direction of the polyimide tube) of 1.05 or more. The "longitudinal direction" here means an axial direction, or a direction perpendicular to the circumferential direction of the polyimide tube. The higher the (the thermal conductivity in the longitudinal direction) / (the thermal conductivity in the circumferential direction) of the polyimide tube, the more preferable, but in consideration of the amount of CNT that can be added to the polyimide resin and the control limit of the orientation of CNT, the upper limit is preferably 1.60, more preferably 1.30, still more preferably 1.20, and particularly preferably 1.15.

As described above, the polyimide tube according to the embodiment of the present invention has a (the thermal conductivity in the longitudinal direction) / (the thermal conductivity in the circumferential direction) of 1.05 or more. That is, the thermal conductivity in the longitudinal direction is higher than the thermal conductivity in the circumferential direction in the polyimide tube (this is presumed to be because the CNTs are oriented in the longitudinal direction along the longitudinal direction of the polyimide tube). Therefore, when the polyimide tube is used as a base layer of a fixing belt or the like, it is possible to suppress excessive temperature rise of the end portion of the fixing belt caused by passage of a sheet or the like between the fixing belt and the press roller. It is presumed that the reason for this is that the thermal conductivity of the polyimide tube in the longitudinal direction is increased, and thus the temperature unevenness in the longitudinal direction of the fixing belt due to the passage of the sheet is suppressed.

The product of the tensile modulus of elasticity in the longitudinal direction of the polyimide tube and the tensile load at break in the tensile test is 4000.0 kgf$^2$/mm$^2$ or more. The "tensile load at break" referred to herein is a tensile load at break observed when a tensile test is performed by a method according to JIS P8113. The higher the product of the tensile modulus of elasticity in the longitudinal direction of the polyimide tube and the tensile load at break in the tensile test, the more preferable, but in consideration of the amount of CNT that can be added to the polyimide resin, the control limit of the orientation of CNT, and the like, the upper limit is preferably 13000 kgf$^2$/mm$^2$, more preferably 11000 kgf$^2$/mm$^2$, and even more preferably 8000 kgf$^2$/mm$^2$.

As described above, in the polyimide tube according to the embodiment of the present invention, the product of the tensile modulus of elasticity in the longitudinal direction and the tensile load at break in the tensile test is 4000.0 kgf$^2$/mm$^2$ or more. Therefore, it is considered that the breakage of the polyimide tube which may occur by forcible withdrawal of the paper when the paper jam occurs in the fixing device can be suppressed. It is presumed that the reason why the end portion of the polyimide tube is torn when the sheet is forcibly pulled out when the paper jam occurs in the fixing device is that the end portion of the fixing belt is deformed by the load applied in the longitudinal direction of the polyimide tube when the sheet is forcibly pulled out when the paper jam occurs in the fixing device. That is, it is considered that the deformation of the polyimide tube is suppressed and the polyimide tube is hardly broken.

The polyimide tube according to the embodiment of the present invention can be suitably used as a base layer of a fixing belt mounted on an image forming apparatus. The polyimide tube according to the embodiment of the present invention has the above-described physical properties, and therefore, the polyimide tube is less likely to be torn by pulling out the paper when the paper jam occurs, while maintaining excellent thermal conductivity.

The tensile modulus of elasticity in the longitudinal direction of the polyimide tube according to the embodiment of the present invention is preferably 700 kgf/mm$^2$ or more, and more preferably 710 kgf/mm$^2$ or more. The tensile modulus of elasticity in the longitudinal direction of the polyimide tube is preferably as high as possible, but the upper limit is preferably 1200 kgf/mm$^2$, and more preferably 1100 kgf/mm$^2$, in view of the characteristics of the polyimide resin.

The thickness of the polyimide tube according to the embodiment of the present invention is preferably in the range of 30 $\mu$m or more and 100 $\mu$m or less from the viewpoint of maintaining minimum mechanical properties, and more preferably in the range of 50 $\mu$m or more and 80 $\mu$m or less from the viewpoint of easiness of manufacturing and flexibility required when the polyimide tube is used as a base layer of a fixing belt or the like.

Next, as the polyimide resin used in the embodiment of the present invention, for example, an imidized product of a polyamide acid (polyamic acid) which is a polymer of a tetracarboxylic dianhydride and a diamine compound is mentioned. Specific examples of the polyimide resin include those obtained by polymerizing an equimolar amount of a tetracarboxylic dianhydride and a diamine compound in a solvent to obtain a solution of a polyamide acid and then imidizing the polyamide acid.

Specific examples of the tetracarboxylic dianhydride include an aromatic tetracarboxylic dianhydride such as pyromellitic dianhydride (PMDA), 1,2,5,6-naphthalene tetracarboxylic dianhydride, 1,4,5,8-naphthalene tetracarboxylic dianhydride, 2,3,6,7-naphthalene tetracarboxylic dianhydride, 2,2',3,3'-biphenyl tetracarboxylic dianhydride, 2,3,3',4'-biphenyl tetracarboxylic dianhydride, 3,3',4,4'-biphenyl tetracarboxylic dianhydride (BPDA), 2,2',3,3'-benzophenone tetracarboxylic dianhydride, 2,3,3',4'-benzophenone tetracarboxylic dianhydride, 3,3',4,4'-benzophenone tetracarboxylic dianhydride (BTDA), bis (3,4-dicarboxyphenyl) sulfone dianhydride, bis (2,3-dicarboxyphenyl) methane dianhydride, bis (3, 4-dicarboxyphenyl) methane dianhydride, 1.05-bis (2, 3-dicarboxyphenyl) ethane dianhydride, 1.05-bis (3, 4-dicarboxyphenyl) ethane dianhydride, 2, 2-bis [3,4-(dicarboxyphenoxy) phenyl] propane dianhydride (BPADA), 4,4'-(hexafluoroisopropylidene) diphthalic anhydride, oxydiphthalic anhydride (ODPA), bis (3,4-dicarboxyphenyl) sulfone dianhydride, bis (3,4-dicarboxyphenyl) sulfoxide dianhydride, thiodiphthalic anhydride, 3,4,9,10-perylene tetracarboxylic dianhydride, 2,3,6,7-anthracene tetracarboxylic dianhydride, 1,2,7,8-phenanthrene tetracarboxylic dianhydride, 9,9-bis (3,4-dicarboxyphenyl) fluorene dianhydride and 9,9-bis [4-(3,4'-dicarboxyphenoxy) phenyl] fluorene dianhydride, and cyclobutane tetracarboxylic dianhydride, 1,2,3,4-cyclopentane tetracarboxylic dianhydride, 2,3,4,5-tetrahydrofuran tetracarboxylic dianhydride, 1,2,4,5-cyclohexane tetracarboxylic dianhydride, 3,4-dicarboxy-1-cyclohexylsuccinic dianhydride, and 3,4-dicarboxy-1,2,3, 4-tetrahydro-1-naphthalenesuccinic dianhydride. It is also possible to use two or more of these tetracarboxylic dianhydride in combination. Among these tetracarboxylic dianhydride, pyromellitic dianhydride (PMDA), 3,3',4,4'-biphenyltetracarboxylic dianhydride (BPDA), 3,3',4,4'-benzophenonetetracarboxylic dianhydride (BTDA), 2,2-bis [3,4-(dicarboxyphenoxy) phenyl] propane dianhydride (BPADA), and oxydiphthalic anhydride (ODPA) are particularly preferable.

Specific examples of diamine compounds include an aromatic diamines such as para-phenylenediamine (PPD), meta-phenylenediamine (MPDA), 2,5-diaminotoluene, 2,6-diaminotoluene, 4,4'-diaminobiphenyl, 3,3'-dimethyl-4,4'-diaminobiphenyl, 3,3'-dimethoxy-4,4'-diaminobiphenyl, 2,2-bis (trifluoromethyl)-4,4'-diaminobiphenyl, 3,3'-diaminodiphenylmethane, 4,4'-diaminodiphenylmethane (MDA), 2,2-bis-(4-aminophenyl) propane, 3,3'-diaminodiphenylsulfone (33DDS), 4,4'-diaminodiphenylsulfone (44DDS), 3,3'-diaminodiphenylsulfide, 4,4'-diaminodiphenylsulfide, 3,3'-diaminodiphenylether, 3,4'-diaminodiphenylether (34ODA), 4,4'-diaminodiphenylether (ODA), 1,5-diaminonaphthalene, 4,4'-diaminodiphenyldiethylsilane, 4,4'-diaminodiphenylsilane, 4,4'-diaminodiphenylethylphosphone oxide, 1, 3-bis (3-aminophenoxy) benzene (133APB), 1,3-bis (4-aminophenoxy) benzene (134APB), 1,4-bis (4-aminophenoxy) benzene, bis [4-(3-aminophenoxy) phenyl] sulfone (BAPSM), bis [4-(4-aminophenoxy) phenyl] sulfone (BAPS), 2,2-bis [4 - (4-aminophenoxy) phenyl] propane (BAPP), 2,2-bis (3-aminophenyl) 1.05,1,3,3,3-hexafluoropropane, 2,2-bis (4-aminophenyl) 1.05,1,3,3,3-hexafluoropropane, and 9, 9-bis (4-aminophenyl) fluorene.

Among polyimide resins, from the viewpoint of durability, thermal conductivity, bending durability and the like, a polyimide resin (BPDA-PPD) consisting of 3,3',4,4'-biphenyltetracarboxylic dianhydride and p-phenylenediamine, or a polyimide resin (BPDA-ODA) consisting of 3,3',4,4'-biphenyltetracarboxylic dianhydride and 4,4'-diaminodiphenyl ether, or a polyimide resin (PMDA-ODA) consisting of pyromellitic dianhydride and 4,4'-diaminodiphenyl ether are preferable. These polyimide resins may be used in combination (i.e., may be copolymerized or blended).

Examples of the organic polar solvent for dissolving the tetracarboxylic dianhydride and the diamine compound which are monomers for preparing the polyamide acid, include N,N-dimethylformamide, N,N-diethylacetamide, N-methyl-2-pyrrolidone, 1,3-dimethyl-2-imidazolidinone, N-methylcaprolactam, hexamethylphosphoric triamide, 1,2-dimethoxyethane, diglycol, triglyme, and the like. Among these diamines, N,N-dimethylacetamide (DMAC) and N-methyl-2-pyrrolidone (NMP) are particularly preferable. These organic polar solvents may be used alone or in combination. In addition, an aromatic hydrocarbon such as toluene or xylene may be mixed in the organic polar solvent.

Other heat conductive particles may be added to the polyimide resin according to the embodiment of the present invention to the extent that the strength and thermal conductivity of the polyimide tube are not impaired.

Next, a method of manufacturing a fixing belt using the polyimide tube as a base layer according to the embodiment of the present invention will be described in detail. The fixing belt according to the embodiment of the present invention is mainly produced through a CNT-containing polyamide acid solution preparation step, a base layer forming step, a primer layer forming step, a release layer forming step, a curing step, and a demolding step. The base layer forming step corresponds to a step of forming the polyimide tube according to the embodiment of the present invention. The fixing belt of the embodiment of the present invention may be provided with an elastic layer between the base layer and the release layer. In such a case, the elastic layer forming step is inserted between the primer layer forming step and the release layer forming step. The elastic layer forming step will be described at the end.

(1) CNT-Containing Polyamide Acid Solution Preparation Step

In the CNT-containing polyamide acid solution preparation step, the above-described CNT is added to the polyimide precursor solution prepared as described below to obtain a CNT-containing polyamide acid solution. The method of adding CNT to the polyamide acid solution is not particularly limited, and may be a method of adding CNT directly to the polyamide acid solution or a method of adding CNT during preparation of the polyamide acid solution.

Examples of the organic polar solvent which can be used to prepare the polyamide acid solution include N,N-dimethylformamide, N,N-dimethylacetamide, N,N-diethylacetamide, N-methyl-2-pyrrolidone, 1,3-dimethyl-2-imidazolidinone, N-methylcaprolactam, hexamethylphosphoric triamide, 1,2-dimethoxyethane, diglycol, triglyme, and the like. Among these diamines, N,N-dimethylacetamide (DMAC) and N-methyl-2-pyrrolidone (NMP) are particularly preferable. These organic polar solvents may be used alone or in combination. In addition, an aromatic hydrocarbon such as toluene or xylene may be mixed in the organic polar solvent.

In the embodiment of the present invention, it is preferable to prepare a polyamide acid solution using 4,4'-diaminodiphenyl ether as a diamine and pyromellitic dianhydride as a tetracarboxylic dianhydride, and it is particularly preferable to prepare a polyamide acid solution using para-phenylenediamine as a diamine and 3,3',4,4'-biphenyltetracarboxylic dianhydride as a tetracarboxylic dianhydride. The polyimide resin obtained by imidizing a polyamide acid prepared from these monomers has excellent mechanical properties and toughness, and does not soften or melt as a thermoplastic resin even when the temperature of the fixing belt rises, and exhibits excellent heat resistance. In addition, the two kinds of polyamide acids described above can be suitably used because a polyimide resin having excellent mechanical properties such as flexibility can be obtained by blending them. Examples of such a blend include a blend of a first polyimide resin containing a unit derived from 3,3',4,4'-biphenyltetracarboxylic dianhydride and a unit derived from para-phenylenediamine and a second polyimide resin containing a unit derived from pyromellitic dianhydride and a unit derived from 4,4'-diaminodiphenyl ether. The mass ratio of the first polyimide resin to the second polyimide resin is preferably in the range of 70:30 or more and 100:0 or less, more preferably in the range of 80:20 or more and 100:0 or less, and still more preferably in the range of 80:20 or more and 97.5:2.5 or less.

If necessary, other resins such as polyamideimide and polyethersulfone may be added to the polyamide acid solution within a range not impairing the essence of the present invention.

Known additives such as a dispersant, a solid lubricant, a precipitation inhibitor, a leveling agent, a surface modifier, a water absorbent, a gelation inhibitor, an antioxidant, an ultraviolet absorber, a light stabilizer, a plasticizer, a skinning inhibitor, a surfactant, an antistatic agent, an antifoaming agent, an antibacterial agent, a antifungal agent, a preservative, and a thickener may be added to the polyamide acid solution within a range not impairing the properties of the present invention. Furthermore, a more than stoichiometric amount of dehydrating agent and imidizing catalyst may be added to the polyamide acid solution.

The polyamide acid solution is preferably subjected to a treatment such as filtration or defoaming before use.

(2) Base Layer Forming Step

The base layer may be formed, for example, using a coater. The coating device, which is an example, comprises a slit head and a moving mechanism for moving at least one of the slit head and a core body upward or downward at a constant speed. In this coater, the core body moves relatively upward or downward inside the slit head while maintaining a predetermined gap. In this situation, in the coater, the CNT-containing polyamide acid solution is discharged from the slit head to the outer surface of the core body from the outside at a predetermined discharge rate, and the CNT-containing polyamide acid solution is cast to a predetermined film thickness on the outer surface of the core body, thereby forming a coating of the CNT-containing polyamide acid solution. The coating is dried and heated at least to a state where the strength of the base layer can be maintained, and then the core body and the base layer are separated to obtain a base layer.

The base layer can also be formed by a method in which the CNT-containing polyamide acid solution is applied to the outer surface of the core body, and then a dies are dropped by their own weight at a speed of 100 mm/s or more to orient the CNTs along the longitudinal direction of the base layer.

(3) Primer Layer Forming Step

In the primer layer forming step, the core body having the base layer formed thereon is dipped in a primer solution containing a dispersoid containing a fluororesin and a water-soluble heat-resistant resin, and then pulled up, whereby the primer solution is uniformly applied to the outer peripheral surface of the base layer, and then the primer solution is heated and dried to form the primer layer. The heating temperature at this time is preferably a temperature at which the solvent is volatilized but the imidization of the polyimide precursor in the CNT-containing polyamide acid solution does not proceed, for example, a temperature of 320 °C or less. The primer layer is made of a fluorocarbon resin and an adhesive resin such as an acrylic resin, a water-soluble heat-resistant resin such as a water-soluble polyamide-imide resin or a water-soluble polyimide resin, or the like, and serves to adhere the base layer and the release layer (or to adhere the base layer and the elastic layer when the elastic layer is provided).

(4) Release Layer Forming Step

In the release layer forming step, after the fluororesin dispersion liquid is applied, the coating is dried to form a coating of the fluororesin dispersion liquid on the primer layer. Examples of the fluorocarbon resin include polytetrafluoroethylene (PTFE), a tetrafluoroethylene-perfluoroalkyl vinyl ether copolymer (PFA), and a tetrafluoroethylene-hexafluoropropylene copolymer (FEP), and these may be used alone or in combination. The release layer may contain a conductive material or the like to the extent that the performance of the release layer is not impaired.

(5) Curing Step

In the curing step, the material obtained in the release layer forming step is cured to obtain a fixing belt. The curing temperature is preferably in the range of 300 °C or higher and 450 °C or lower. The treatment time is preferably in the range of 30 minutes or more and 2 hours or less. This is because the completion of the imidization of the base layer and the curing of the fluororesin of the release layer are simultaneously performed, and thus it is possible to realize the shortening of the manufacturing time of the fixing belt and the improvement of the thermal efficiency, and it is also possible to enhance the adhesive strength of each layer.

(6) Demolding Step

In the demolding step, the fixing belt is removed from the core body.

(7) Elastic Layer Forming Step

As described above, when the elastic layer is provided between the base layer and the release layer of the fixing belt, the elastic layer forming step is performed between the primer layer forming step and the release layer forming step, and the primer layer forming step is performed again between the elastic layer forming step and the release layer forming step. In the elastic layer forming step, after the stock solution of the silicone rubber is applied onto the primer layer, the coating is thermally cured to form the elastic layer on the primer layer. In the subsequent primer layer forming step, the core body having the elastic layer formed thereon is dipped in the primer solution and then pulled up, whereby the primer solution is uniformly applied to the outer peripheral surface of the elastic layer, and then the primer solution is heated and dried to form the primer layer.

<Characteristics of Fixing Belt according to Embodiment of the Present Invention>

In an image forming apparatus using a general fixing belt, a heater provided inside the fixing belt melts and fixes toner to a recording medium such as paper through the fixing belt. Therefore, not only the recording medium but also the fixing belt is heated by the heater. When a recording medium such as paper passes between the fixing belt and the press roller, heat of the fixing belt is absorbed by the recording medium. Therefore, a temperature difference is generated between the recording medium passing portion and the recording medium non-passing portion of the fixing belt, and the non-passing portion is likely to be excessively heated, but in the fixing belt according to the embodiment of the present invention, since the CNTs are oriented in the longitudinal direction, the thermal conductivity in the longitudinal direction is improved, so that the temperature can be more uniformly maintained, and the excessive temperature rise of the fixing belt itself can be suppressed. Further, since the CNTs are oriented in the longitudinal direction, even when the end portion of the fixing belt is deformed as a result of forcibly pulling out the recording medium when a paper jam occurs, the breakage of the fixing belt is suppressed.

<WORKING EXAMPLES AND COMPARATIVE EXAMPLES>

The fixing belt according to the embodiment of the present invention will be described in more detail below with reference to WORKING EXAMPLEs and COMPARATIVE EXAMPLEs. The present invention is not limited by these WORKING EXAMPLEs and COMPARATIVE EXAMPLEs.

WORKING EXAMPLE 1

1. Preparation of Fixing Belt

First, a mold having an outer diameter of 18 mm and a length of 500 mm, the surface of which was subjected to a mold release treatment, was prepared.

Next, a carbon nanotube (VGCF-H (fiber diameter: 150 nm, fiber length: 4 μm) manufactured by Showa Denko K.K., hereinafter sometimes referred to as "CNT") is added to a polyamide acid solution (the polyamide acid is a blend of a polyamide acid A of 3,3',4,4'-biphenyltetracarboxylic dianhydride (BPDA) / para-phenylenediamine (PPD) and a polyamide acid B of pyromellitic dianhydride (PMDA) / 4,4'-diaminodiphenyl ether (ODA) at a mass ratio of polyamide acid A : polyamide acid B = 97.5:2.5, 18.8 parts by mass of solids.) so that CNT occupies 17.0 parts by volume with respect to the total volume of the solid content (i.e., polyimide resin) of the polyamide acid solution and CNTs. Then, the resulting polyamide acid solution was stirred until the CNTs became homogeneous, thereby obtaining a CNT-containing polyamide acid solution having a viscosity of 900 poise.

Next, the CNT-containing polyamide acid solution was discharged from the slit head of a device equipped with an annular slit head facing the outer diameter of the mold body passing through the device with a predetermined gap therebetween, from the outside at a constant discharge rate, onto the outer surface of the mold body moving at a speed of 100 mm/s, and the CNT-containing polyamide acid solution was applied to the outer surface of the mold body. Thereafter, the mold body with the coating was placed in an oven at 120 °C and dried for 30 minutes, then heated to a temperature of 200 °C for 20 minutes, and then held at the same temperature for 20 minutes, and then cooled to room temperature to prepare a base layer.

Next, a primer liquid was applied to the surface of the base layer, and the coating was dried at 150 °C for 10 minutes to prepare a primer layer.

Subsequently, the PFA dispersion was applied to the primer layer and dried to form a PFA coating film on the primer layer. The PFA coating was dried at room temperature for 30 minutes, then heated up to 350 ° C in stages, and cured at 350 °C for 30 minutes to obtain a desired fixing belt having a thickness of the base layer of 60 μm.

2. Physical property evaluation

(1) Measurement of Thermal Conductivity of Base Layer

Here, the base layer obtained before the primer liquid and the PFA dispersion were applied was used as the measurement object.

First, referring to JIS R2616, only the base layer was cut into pieces of 2 cm x 2 cm, a transistor was provided on one surface of the base layer via heat conductive grease, and a heat sink (made of aluminum) was provided on the opposite surface via heat conductive grease. Next, a current was applied to raise the temperature of the transistor to 60 °C, and the base layer was heated at 60 °C for 3 minutes. Next, the temperature A of the transistor surface and the temperature B of the base layer surface provided with the heat sink were measured using a thermocouple, and the power consumption was measured. The temperature of each surface and power consumption were substituted into the following equation to calculate the thermal resistance.

Thermal resistance = (temperature A of transistor surface - temperature B of base layer surface) / power consumption

The film thickness of the base layer, the cross-sectional area of the transistor, and the thermal resistance calculated by the above equation were substituted into the following equation to calculate the thermal conductivity.

Thermal conductivity = Thickness of base layer / (Cross-sectional area of transistor x Thermal resistance)

The thermal conductivity of the base layer was found to be 1.10 W/mK.

Then, the thermal conductivity of the base layer in the longitudinal and circumferential directions was measured. The measurement method is as follows.

First, a base layer piece was prepared by cutting the base layer into a square of 1.5 cm x 1.5 cm, and the base layer piece was laminated until the thickness became 5 mm so that the longitudinal direction and the circumferential direction were the same, thereby preparing a test piece. Next, a square bar made of aluminum having a size of 15 mm in width, 5 mm in thickness, and 60 mm in length (hereinafter, sometimes referred to as an "aluminum bar") was placed on a hot plate set at 180 °C. Next, the test piece was placed on the aluminum rod so that the longitudinal direction (in the case of measuring the thermal conductivity in the longitudinal direction) or the circumferential direction (in the case of measuring the thermal conductivity in the circumferential direction) of the test piece was parallel to the thickness direction of the aluminum rod, and the periphery of the aluminum rod and the test piece were covered with a heat insulating material. Subsequently, a cooling fan was attached to the upper surface of the test piece. Finally, the temperatures of the upper and lower surfaces of the test piece and the temperatures of the upper and lower surfaces of the aluminum plate required for calculating the thermal conductivity of the test piece were measured by a thermocouple.

The measurement results were substituted into the following equation to calculate the thermal conductivity.

$$\lambda f = ((\lambda a \text{ x } \Delta Ta/La) \text{ x } (Lf/\Delta Tf)$$

$\lambda f$: thermal conductivity of the test piece, $\lambda a$: thermal conductivity of the aluminum rod, $\Delta Tf$: temperature difference between the upper and lower portions of the test piece, $\Delta Ta$: temperature difference between the upper and lower portions of the aluminum rod, Lf: thickness of the test piece, La: thickness of the aluminum rod

As a result, it was confirmed that the thermal conductivity in the longitudinal direction / the thermal conductivity in the circumferential direction of the test piece, that is, the base layer was 1.05. This result suggests that the CNTs are oriented in the longitudinal direction.

(2) Measurement of tensile modulus of elasticity and tensile load at break of base layer

After the base layer was cut open, the base layer was punched out such that the vertical direction of a JIS-No. 3 dumbbell (JIS K6301) was along the longitudinal direction of the base layer, thereby producing a dumbbell-shaped test piece. The dumbbell-shaped test piece was set in an Autograph AGS-50A manufactured by Shimadzu Corporation having a chuck distance set at 30 mm in a conventional manner, and the dumbbell-shaped test piece was pulled at a tensile speed of 50 mm/min to measure the tensile modulus of elasticity at the maximum inclination and the tensile load at break observed when the tensile test was carried out by a method according to JIS P8113. As a result, the tensile modulus of elasticity was 982 kgf/mm$^2$, the tensile load at break was 7.2 kgf, and the product of the tensile modulus of elasticity and the tensile load at break was 7070.4 kgf$^2$/mm$^2$.

(3) Paper pull-out test in the case of paper jam

It was confirmed that the fixing belt was hardly torn even when the fixing belt was incorporated in the fixing device, the paper jam was repeatedly generated in the fixing device, and the paper was forcibly pulled out.

**WORKING EXAMPLE 2**

A fixing belt was obtained in the same manner as in WORKING EXAMPLE 1 except that the CNT was added to the polyamide acid solution in an amount of 21.0 parts by volume with respect to the total volume of the solid content (i.e., polyimide resin) of the polyamide acid solution and CNT, and the CNT-containing polyamide acid solution was applied to the outer surface of the mold body so that the thickness of the base layer was 60 μm. The results were obtained.

The thermal conductivity of the base layer of the fixing belt thus obtained was 1.45 W/mK, the thermal conductivity in the longitudinal direction / the thermal conductivity in the circumferential direction of the base layer was 1.05, the tensile modulus of elasticity of the base layer was 976 kgf/mm$^2$, the tensile load at break of the base layer was 6.6 kgf, and the product of the tensile modulus of elasticity of the base layer and the tensile load at break was 6441.6 kgf$^2$/mm$^2$. Further, it

was confirmed that the fixing belt is hardly torn even when the fixing belt was incorporated in the fixing device, the paper jam was repeatedly generated in the fixing device, and the paper was forcibly pulled out.

**WORKING EXAMPLE 3**

A fixing belt was obtained in the same manner as in WORKING EXAMPLE 1 except a polyamide acid solution containing blend of a polyamide acid A of 3,3',4,4'-biphenyltetracarboxylic dianhydride (BPDA) / para-phenylenediamine (PPD) and a polyamide acid B of pyromellitic dianhydride (PMDA) / 4,4'-diaminodiphenyl ether (ODA) at a mass ratio of polyamide acid A: polyamide acid B = 80:20 (17.0 parts by mass of solids) was used instead of the polyamide acid solution, the CNT was added to the polyamide acid solution in an amount of 26.0 parts by volume with respect to the total volume of the solid content (i.e., polyimide resin) of the polyamide acid solution and CNT, and the CNT-containing polyamide acid solution was applied to the outer surface of the mold body so that the thickness of the base layer was 70 $\mu$m.
The thermal conductivity of the base layer of the fixing belt thus obtained was 1.85 W/mK, the thermal conductivity in the longitudinal direction / the thermal conductivity in the circumferential direction of the base layer was 1.06, the tensile modulus of elasticity of the base layer was 932 kgf/mm$^2$, the tensile load at break of the base layer was 5.6 kgf, and the product of the tensile modulus of elasticity of the base layer and the tensile load at break was 5219.2 kgf$^2$/mm$^2$. Further, it was confirmed that the fixing belt is hardly torn even when the fixing belt was incorporated in the fixing device, the paper jam was repeatedly generated in the fixing device, and the paper was forcibly pulled out.

**WORKING EXAMPLE 4**

A fixing belt was obtained in the same manner as in WORKING EXAMPLE 3 except that the CNT was added to the polyamide acid solution in an amount of 30.0 parts by volume with respect to the total volume of the solid content (i.e., polyimide resin) of the polyamide acid solution and CNT, and the CNT-containing polyamide acid solution was applied to the outer surface of the mold body so that the thickness of the base layer was 70 $\mu$m.
The thermal conductivity of the base layer of the fixing belt thus obtained was 2.20 W/mK, the thermal conductivity in the longitudinal direction / the thermal conductivity in the circumferential direction of the base layer was 1.07, the tensile modulus of elasticity of the base layer was 923 kgf/mm$^2$, the tensile load at break of the base layer was 5.4 kgf, and the product of the tensile modulus of elasticity of the base layer and the tensile load at break was 4984.2 kgf$^2$/mm$^2$. Further, it was confirmed that the fixing belt is hardly torn even when the fixing belt was incorporated in the fixing device, the paper jam was repeatedly generated in the fixing device, and the paper was forcibly pulled out.

**WORKING EXAMPLE 5**

A fixing belt was obtained in the same manner as in WORKING EXAMPLE 1 except that a polyamide acid solution containing only a polyamide acid of 3,3',4,4'-biphenyltetracarboxylic dianhydride (BPDA) / para-phenylenediamine (PPD) (18.8 parts by mass of solids) was used instead of the polyamide acid solution, the CNT was added to the polyamide acid solution in an amount of 15.5 parts by volume with respect to the total volume of the solid content (i.e., polyimide resin) of the polyamide acid solution and CNT, and the CNT-containing polyamide acid solution was applied to the outer surface of the mold body so that the thickness of the base layer was 80 $\mu$m.
The thermal conductivity of the base layer of the fixing belt thus obtained was 1.00 W/mK, the thermal conductivity in the longitudinal direction / the thermal conductivity in the circumferential direction of the base layer was 1.06, the tensile modulus of elasticity of the base layer was 1013 kgf/mm$^2$, the tensile load at break of the base layer was 10.2 kgf, and the product of the tensile modulus of elasticity of the base layer and the tensile load at break was 10332.6 kgf$^2$/mm$^2$. Further, it was confirmed that the fixing belt was hardly torn even when the fixing belt was incorporated in the fixing device, the paper jam was repeatedly generated in the fixing device, and the paper was forcibly pulled out.

**WORKING EXAMPLE 6**

A fixing belt was obtained in the same manner as in WORKING EXAMPLE 1 except that a polyamide acid solution containing blend of a polyamide acid A of 3,3',4,4'-biphenyltetracarboxylic dianhydride (BPDA) / para-phenylenediamine (PPD) and a polyamide acid B of pyromellitic dianhydride (PMDA) / 4,4'-diaminodiphenyl ether (ODA) at a mass ratio of polyamide acid A: polyamide acid B = 70:30 (17.0 parts by mass of solids) was used instead of the polyamide acid solution, the CNT was added to the polyamide acid solution in an amount of 32.0 parts by volume with respect to the total volume of the solid content (i.e., polyimide resin) of the polyamide acid solution and CNT, and the CNT-containing polyamide acid solution was applied to the outer surface of the mold body so that the thickness of the base layer was 70 $\mu$m.
The thermal conductivity of the base layer of the fixing belt thus obtained was 2.55 W/mK, the thermal conductivity in the longitudinal direction / the thermal conductivity in the circumferential direction of the base layer was 1.08, the tensile modulus of elasticity of the base layer was 903 kgf/mm$^2$, the tensile load at break of the base layer was 4.6 kgf, and the product of the tensile modulus of elasticity of the base layer and the tensile load at break was 4153.8 kgf$^2$/mm$^2$. Further, it was confirmed that the fixing belt was hardly torn even when the fixing belt was incorporated in the fixing device, the paper jam was repeatedly generated in the fixing device, and the paper was forcibly pulled out.

(COMPARATIVE EXAMPLE 1)

A fixing belt was obtained in the same manner as in WORKING EXAMPLE 1 except that a polyamide acid solution containing blend of a polyamide acid A of 3,3',4,4'-biphenyltetracarboxylic dianhydride (BPDA) / para-phenylenediamine (PPD) and a polyamide acid B of pyromellitic dianhydride (PMDA) / 4,4'-diaminodiphenyl ether (ODA) at a mass ratio of polyamide acid A: polyamide acid B = 80:20 (18.8 parts by mass of solids) was used instead of the polyamide acid solution, boron nitride (MBN 010T manufactured by Mitsui Chemicals) was used instead of the CNT, the boron nitride was added to the polyamide acid solution in an amount of 40.0 parts by volume with respect to the total volume of the solid content (i.e., the polyimide resin) of the polyamide acid solution and boron nitride, the polyamide acid solution was stirred until the boron nitride became uniform, and the boron nitride -containing polyamide acid solution was applied to the outer surface of the mold body so that the thickness of the base layer was 60 μm.

The thermal conductivity of the base layer of the fixing belt thus obtained was 1.05 W/mK, the thermal conductivity in the longitudinal direction / the thermal conductivity in the circumferential direction of the base layer was 1.00, the tensile modulus of elasticity of the base layer was 915 kgf/mm$^2$, the tensile load at break of the base layer was 4.0 kgf, and the product of the tensile modulus of elasticity of the base layer and the tensile load at break was 3660.0 kgf$^2$/mm$^2$. Further, the fixing belt was torn when the fixing belt was incorporated in the fixing device, the paper jam was repeatedly generated in the fixing device, and the paper was forcibly pulled out.

**Claims**

1.  A polyimide tube containing a polyimide resin,

    wherein the polyimide resin contains carbon nanotubes,
    a thermal conductivity of the polyimide tube in a film thickness direction is 1.00 W/mK or more,
    a thermal conductivity in a longitudinal direction / a thermal conductivity in a circumferential direction of the polyimide tube is 1.05 or more,
    a product of a tensile modulus of elasticity in the longitudinal direction of the polyimide tube and a tensile load at break in a tensile test is 4000.0 kgf$^2$/mm$^2$ or more.

2.  The polyimide tube according to claim 1,
    wherein a thermal conductivity in the thickness direction of the polyimide tube is 3.20 W/mK or less.

3.  The polyimide tube according to claim 1,
    wherein the thermal conductivity in the longitudinal direction / the thermal conductivity in the circumferential direction of the polyimide tube is 1.60 or less.

4.  The polyimide tube according to claim 1,
    wherein the product of the tensile modulus of elasticity in the longitudinal direction of the polyimide tube and the tensile load at break in a tensile test is 13000 kgf$^2$/mm$^2$ or less.

5.  The polyimide tube according to claim 1,

    wherein the polyimide resin is a blend of a first polyimide resin containing a unit derived from 3,3',4,4'-biphenyltetracarboxylic dianhydride and a unit derived from para-phenylenediamine, and a second polyimide resin containing a unit derived from pyromellitic dianhydride and a unit derived from 4,4'-diaminodiphenyl ether, the mass ratio of the first polyimide resin to the second polyimide resin is in the range of 70:30 or more and 100:0 or less.

6.  The polyimide tube according to any one of claims 1 through 4,
    wherein the tensile modulus of elasticity in the longitudinal direction of the polyimide tube is 700 kgf/mm$^2$ or more.

7.  The polyimide tube according to claim 5,

wherein the tensile modulus of elasticity in the longitudinal direction of the polyimide tube is 1200 kgf/mm$^2$ or less.

8. A fixing belt using the polyimide tube according to claim 1 as a base layer.

## INTERNATIONAL SEARCH REPORT

International application No.

**PCT/JP2023/025961**

| A. | CLASSIFICATION OF SUBJECT MATTER |
|---|---|

*G03G 15/20*(2006.01)i; *C08K 3/04*(2006.01)i; *C08L 79/08*(2006.01)i
FI:   G03G15/20 510; C08L79/08 B; C08K3/04

According to International Patent Classification (IPC) or to both national classification and IPC

| B. | FIELDS SEARCHED |
|---|---|

Minimum documentation searched (classification system followed by classification symbols)

G03G13/20; 15/20; C08K3/04; C08L79/08

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2014-228729 A (CANON KABUSHIKI KAISHA) 08 December 2014 (2014-12-08) paragraphs [0044]-[0067], fig. 3, 4 | 1-8 |
| A | JP 2016-12072 A (KYOCERA DOCUMENT SOLUTIONS INC.) 21 January 2016 (2016-01-21) paragraphs [0032]-[0040], [0045], fig. 2 | 1-8 |
| A | JP 2007-272223 A (IST CORP.) 18 October 2007 (2007-10-18) paragraphs [0030], [0032], [0034], [0037], [0038], [0041], fig. 1 | 1-8 |
| A | JP 2019-211701 A (CANON KABUSHIKI KAISHA) 12 December 2019 (2019-12-12) paragraphs [0014], [0018], [0019], [0047], [0051], [0118], [0119], fig. 2(a) | 1-8 |

☐ Further documents are listed in the continuation of Box C.     ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | |
| "O" | document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" | document published prior to the international filing date but later than the priority date claimed | "&" document member of the same patent family |

| Date of the actual completion of the international search | Date of mailing of the international search report |
|---|---|
| **07 August 2023** | **15 August 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

EP 4 697 102 A1

International application No.

PCT/JP2023/025961

| Patent document cited in search report | | | Publication date (day/month/year) | Patent family member(s) | | | Publication date (day/month/year) |
|---|---|---|---|---|---|---|---|
| JP | 2014-228729 | A | 08 December 2014 | US | 2014/0348559 | A1 | |
| | | | | paragraphs [0049]-[0073], fig. 3, 4 | | | |
| JP | 2016-12072 | A | 21 January 2016 | US | 2015/0378286 | A1 | |
| | | | | paragraphs [0030]-[0038], [0043], fig. 2 | | | |
| | | | | CN | 105278300 | A | |
| JP | 2007-272223 | A | 18 October 2007 | (Family: none) | | | |
| JP | 2019-211701 | A | 12 December 2019 | US | 2019/0377290 | A1 | |
| | | | | paragraphs [0019]-[0021], [0027], [0028], [0063], [0064], [0069], [0187]-[0189], fig. 2A | | | |
| | | | | EP | 3611573 | A1 | |
| | | | | CN | 110579952 | A | |
| | | | | SG | 10201905081V | A | |

Form PCT/ISA/210 (patent family annex) (January 2015)

**EP 4 697 102 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006330405 A